Europäisches Patentamt

European Patent Office

Office européen des brevets

(11) Veröffentlichungsnummer: **0 259 650 B1**

(12) **EUROPÄISCHE PATENTSCHRIFT**

(45) Veröffentlichungstag der Patentschrift: **23.10.91**

(21) Anmeldenummer: **87111868.3**

(22) Anmeldetag: **17.08.87**

(51) Int. Cl.⁵: **B65H 29/66**

(54) **Verfahren und Vorrichtung zum Vergleichmässigen des Abstandes zwischen aufeinanderfolgenden, in einer Schuppenformation anfallenden Produkten, insbesondere Druckererzeugnissen.**

(30) Priorität: **08.09.86 CH 3597/86**

(43) Veröffentlichungstag der Anmeldung:
**16.03.88 Patentblatt 88/11**

(45) Bekanntmachung des Hinweises auf die Patenterteilung:
**23.10.91 Patentblatt 91/43**

(84) Benannte Vertragsstaaten:
**AT CH DE FR GB IT LI SE**

(56) Entgegenhaltungen:
**EP-A- 254 851**
**EP-A- 0 075 121**
**DE-A- 3 148 349**
**DE-A- 3 409 548**
**US-A- 3 724 840**

(73) Patentinhaber: **Ferag AG**
**Zürichstrasse 74**
**CH-8340 Hinwil(CH)**

(72) Erfinder: **Frei, Hans**
**Kreuzlen 505**
**CH-8618 Oetwil am See(CH)**

(74) Vertreter: **Patentanwälte Schaad, Balass & Partner**
**Dufourstrasse 101 Postfach**
**CH-8034 Zürich(CH)**

## Beschreibung

Die vorliegende Erfindung betrifft ein Verfahren und eine Vorrichtung zum Vergleichmässigen des Abstandes zwischen aufeinanderfolgenden, in einer Schuppenformation anfallenden, flächigen Produkten, insbesondere Druckereierzeugnissen, gemäss Oberbegriff des Anspruches 1 bzw. des Anspruches 4.

Es sind die verschiedensten Vorrichtungen zum Vergleichmässigen des Schuppenabstandes bekannt, die jedoch nur dazu geeignet sind, innerhalb verhältnismässig enger Grenzen liegende Abweichungen des Schuppenabstandes von einer Sollgrösse auszugleichen. Ein Beispiel hiefür ist die in der DE-OS 3148349 beschriebene Einrichtung zum Vergleichmässigen eines Schuppenstromes von Druckbogen. Bei dieser Vorrichtung wird die Schuppenformation mittels eines Bandförderers schrittweise vorgeschoben, wobei während jedem Vorschubschritt Anschlagfinger in den Förderweg der Schuppenformation hineinbewegt werden. Die Druckbogen kommen dabei mit ihrer vorlaufenden Kante an den Anschlagfingern zum Anstossen, wodurch sie an ihrer weiteren Vorwärtsbewegung gehindert werden. Am Ende jedes Vorschubschrittes werden die Anschlagfinger wieder aus dem Förderweg herausbewegt.

Es ist offensichtlich, dass mit dieser bekannten Vorrichtung der Schuppenabstand dann nicht mehr ausgeglichen werden kann, wenn im anfallenden Schuppenstrom der Abstand zwischen aufeinanderfolgenden Produkten grösser ist als die Länge der Vorschubschritte.

Der vorliegenden Erfindung liegt nun die Aufgabe zugrunde, ein Verfahren bzw. eine Vorrichtung der eingangs genannten Art zu schaffen, das bzw. die ein wirkungsvolles Ausgleichen der Abstände zwischen aufeinanderfolgenden Produkten auch bei grossen Abweichungen von einem Sollwert ermöglicht.

Diese Aufgabe wird erfindungsgemäss durch die Merkmale des kennzeichnenden Teils des Anspruches 1 bzw. des Anspruches 4 gelöst.

Die in Schuppenformation zugeführten Produkte werden ebenfalls in geschuppter Lage auf einen Förderer abgelegt, dessen Fördergeschwindigkeit kleiner ist als die Zuführgeschwindigkeit der Produkte. Dies hat eine Verkleinerung der Abstände zwischen aufeinanderfolgenden Produkten zur Folge. Die Uebergabestelle, an der die Produkte von einem ersten Förderer auf den nachgeschalteten zweiten Förderer übergeben werden, ist in Förderrichtung der beiden Förderer verschiebbar. Dies ermöglicht es nun, die Uebergabestelle dem hintersten auf dem zweiten Förderer aufliegenden Produkt nachzuführen, sobald im ankommenden Schuppenstrom eine Abweichung im Schuppenabstand gestellt wird. Dieses Nachführen der Uebergabestelle dauert solange, bis das nächste vom ersten Förderer zugeführte Produkt auf dem hintersten Produkt auf dem zweiten Förderer zur Auflage gebracht werden kann. Auf diese Weise können somit auch grössere Lücken in der anfallenden Schuppenformation geschlossen werden.

Aus der DE-OS 2,307,728 ist es nun bekannt, einzeln und nacheinander durch einen ersten Förderer zugeführte Säcke an einen nachgeschalteten zweiten Förderer zu übergeben, dessen Förderebene tiefer liegt als diejenige des ersten Förderers und dessen Fördergeschwindigkeit kleiner ist als diejenige des ersten Förderers. Auf diesem zweiten Förderer werden die einzeln zugeführten Säcke in Schuppenformation abgelegt. Nach einer Zwischenspeicherung auf diesem zweiten Förderer werden die Säcke einzeln abgezogen und einer nachgeschalteten Verarbeitungsstation zugeführt. Jedes Abziehen eines Sackes vom zweiten Förderer hat ein Einschalten des letzteren für eine gewisse Zeit zur Folge, um die auf dem zweiten Förderer aufliegende Schuppenformation um einen Schritt vorzuschieben.

Die Uebergabestelle zwischen dem ersten und dem zweiten Förderer ist in Förderrichtung dieser beiden Förderer verschiebbar und wird mittels einer Lichtschrankensteuerung dem hintersten auf dem zweiten Förderer aufliegenden Sack nachgeführt. Da der zweite Förderer die auf ihm aufliegende Schuppenformation wie bereits erwähnt nur schrittweise vorschiebt, während der erste Förderer im wesentlichen dauernd Säcke zuführt, dient das Nachführen der Uebergabestelle in erster Linie dazu, auch dann die ankommenden Säcke auf dem zweiten Förderer ablegen zu können, wenn letzterer stillsteht. Auf dem zweiten Förderer wird so ein Pufferspeicher gebildet, der die ankommenden Säcke aufzunehmen in der Lage ist, auch wenn pro Zeiteinheit mehr Säcke zugeführt werden als in der nachgeschalteten Weiterverarbeitungsstation verarbeitet werden können. Diese bekannte Vorrichtung dient also nicht zur Vergleichmässigung des Schuppenabstandes, sondern zur Bildung eines Pufferspeichers aus geschuppt aufeinanderliegenden Säcken.

Vorzugsweise wird am Ende der förderwirksamen Strecke des zweiten Förderers eine Mitnehmereinrichtung gemäss den Ansprüchen 16-18 angeordnet, durch welche die Produkte in gegebenen zeitlichen Abständen erfasst und beschleunigt werden. Auf diese Weise wird der Schuppenabstand wieder vergrössert, vorzugsweise auf etwa den ursprünglichen Wert. Gleichzeitig wird aber der Schuppenabstand noch endgültig ausgeglichen.

Weitere bevorzugte Weiterausgestaltungen des Erfindungsgegenstands, sind in den übrigen abhängigen Ansprüchen umschrieben.

2

Im folgenden wird die Erfindung anhand der Zeichnungen näher erläutert. Es zeigen rein schematisch:

Figur 1        eine Vorrichtung zum Vergleichmässigen des Schuppenabstandes in Seitenansicht,

Figur 2        in gegenüber der Figur 1 ver-grössertem Massstab den ein-laufseitigen Bereich der Vorrichtung gemäss Figur 1,

Figur 3        einen Schnitt entlang der Linie III-III in Figur 1,

Figur 4        einen Schnitt entlang der Linie IV-IV in Figur 1, und

Figuren 5-8    in gegenüber der Figur 2 vereinfachter Darstellung, verschiedene Arbeitsphasen der erfin-dungsgemässen Vergleichmäs-sigungsvorrichtung.

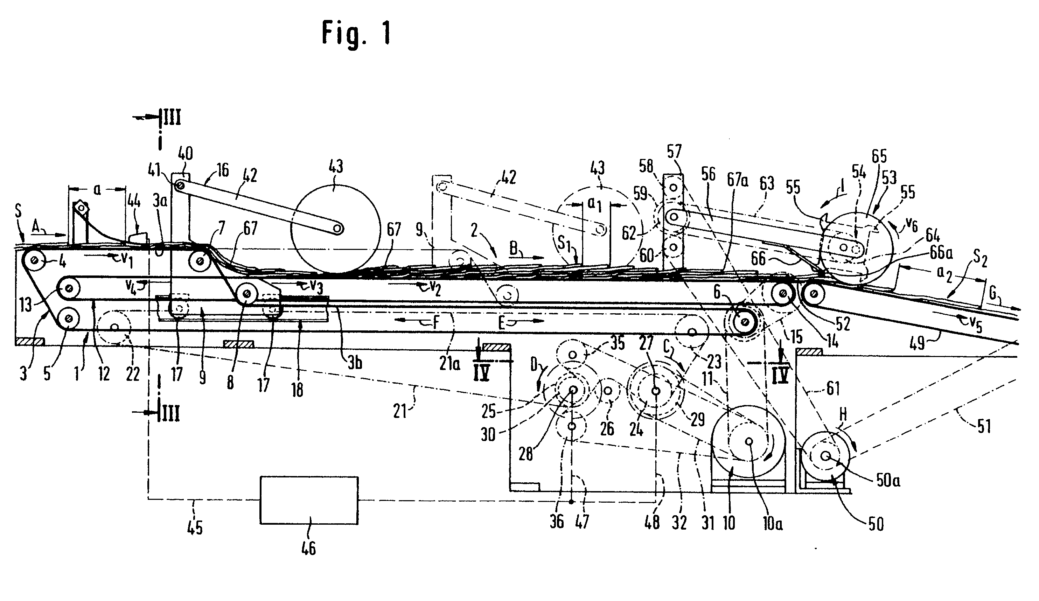

Anhand der Figuren 1-4 wird im folgenden der Aufbau der Vergleichmässigungsvorrichtung erläutert.

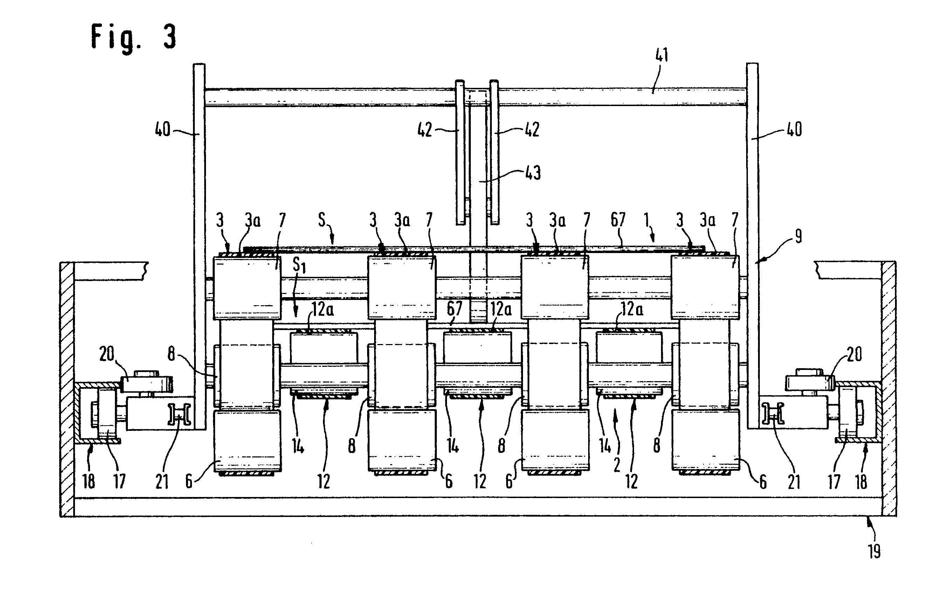

Die Vereinzelungsvorrichtung weist zwei Förderer 1 und 2 auf, deren Förderrichtung mit A bzw. B bezeichnet ist. Wie aus Figur 3 hervorgeht, wird der erste Förderer 1 durch vier in einem gegenseitigen Abstand nebeneinander angeordnete, endlose Förderbänder 3 gebildet, die über ortsfeste Umlenkrollen 4, 5 und 6 geführt sind. Im weitern laufen diese Förderbänder 3 über zwei weitere Umlenkrollen 7 und 8, die an einem Wagen 9 gelagert sind, dessen Aufbau noch zu erläutern sein wird. Die Umlenkrolle 6 wird von einem Antriebsmotor 10 her angetrieben, dessen Welle 10a im Uhrzeigersinn umläuft. Die Antriebsverbindung zwischen dem Antriebsmotor 10 und der Umlenkrolle 6 besteht aus einer Antriebskette 11. Die Förderbänder 3 des ersten Förderers 1 werden mit einer Geschwindigkeit $v_1$ umlaufend angetrieben.

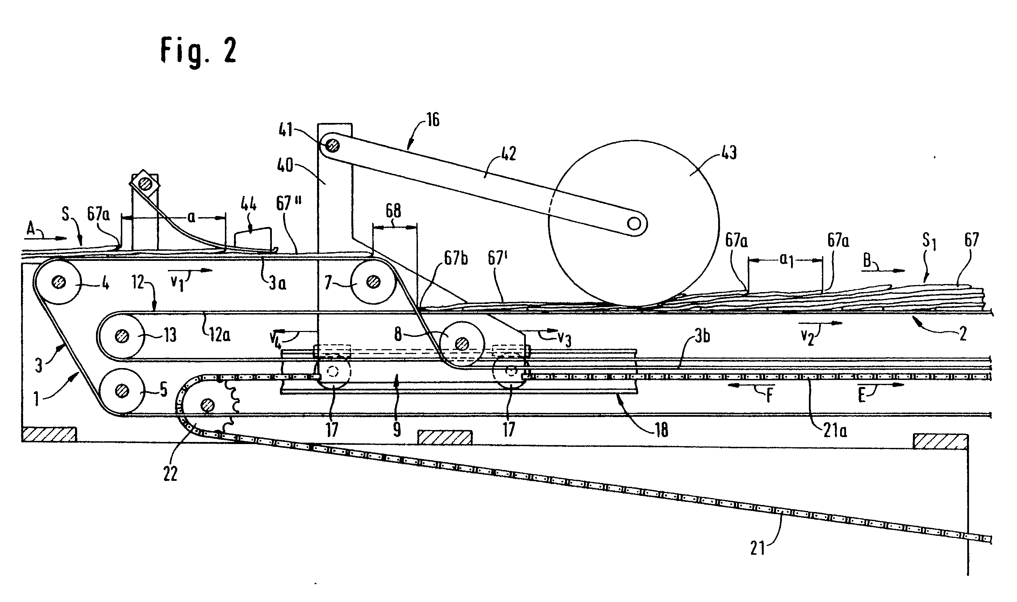

Der zweite Förderer 2 wird durch drei in einem gegenseitigen Abstand nebeneinander angeordnete, ebenfalle endlose Förderbänder 12 gebildet, wie das ebenfalls aus Figur 3 hervorgeht. Diese Förderbänder 12 werden über ortsfeste Umlenkrollen 13 und 14 geführt, von denen die Umlenkrolle 14 über eine Antriebskette 15 vom Förderer 1 her angetrieben wird, wie das aus Figur 1 ersichtlich ist. Die Fördergeschwindigkeit dieses zweiten Förderers $v_2$ ist kleiner als die Fördergeschwindigkeit $v_1$ des ersten Förderers 1 und beträgt beim dargestellten Ausführungsbeispiel etwa die Hälfte der Fördergeschwindigkeit $v_1$. Wie aus den Figuren 1 und 2 hervorgeht, verläuft der zwischen den Umlenkrollen 4 und 7 verlaufende Abschnitt 3a der Förderbänder 3 oberhalb des obern Trums 12a der Förderbänder 12 des Förderers 2. Zwischen den an Wagen 9 angeordneten Umlenkrollen 7 und 8 wird der obere Trum der Förderbänder 3 nach abwärts geführt, so dass der zwischen den Umlenkrollen 8 und 6 verlaufende Abschnitt 3b des obern Trums der Förderbänder 3 unterhalb der Förderebene verlaufen, welche durch die obern Trume 12a der Förderbänder 12 festgelegt wird. Durch den Wagen 9 und insbesondere durch die an diesem angeordneten Umlenkrollen 7 und 8 wird eine Uebergabestelle 16 festgelegt, an der der vorher förderunwirksame Förderer 2 nun förderwirksam wird.

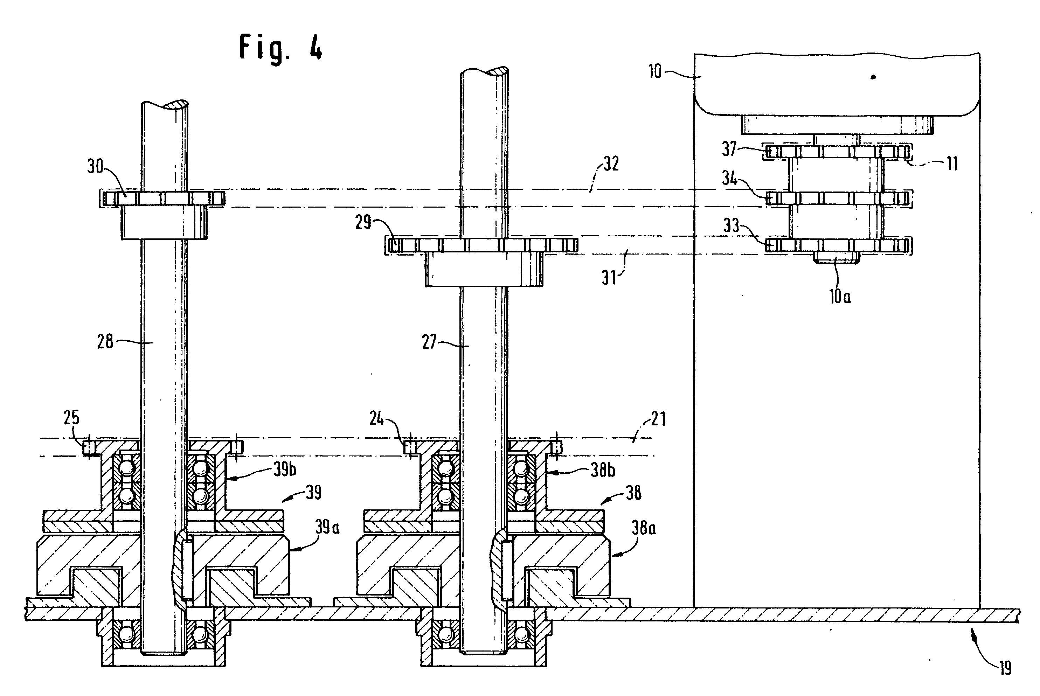

Der Wagen 9 ist an beiden Seiten mit Laufrädern 17 ausgerüstet, welche in einer U-förmigen Längsführung 18 geführt sind, welche sich in Förderrichtung A bzw. B der beiden Förderer 1,2 erstrecken und an einem Gestell 19 befestigt sind (siehe insbesondere die Figur 3). Am Wagen sind weiter Führungsräder 20 angeordnet, die sich am einen Flansch der Längsführungen 18 abrollen. Der Wagen 9 ist an zwei endlosen Ketten 21 befestigt (Figur 3), deren oberer Trum 21a sich in Förderrichtung A bzw. B der Förderer 1, 2 erstreckt. Die Ketten 21 sind über ortsfeste Umlenkräder 22 und 23 sowie über weitere ortsfeste Umlenkräder 24, 25 und 26 geführt (Figur 1). Wie Figur 4 zeigt, sind die Umlenkräder 24 und 25 auf Wellen 27 und 28 gelagert, die ihrerseits drehbar im Gestell 19 gelagert sind. Auf den Wellen 27 und 28 sitzen Kettenräder 29 und 30, welche über Ketten 31 und 32 mit Kettenrädern 33 und 34 in Antriebsverbindung stehen, welche auf der Welle 10a des Antriebsmotors 10 sitzen. Wie die Figur 1 zeigt, ist die Antriebskette 32 weiter über zwei Umlenkräder 35 und 36 geführt, zwischen denen das Kettenrad 30 angeordnet ist. Die Welle 28 wird demnach im Gegenuhrzeigersinn, d.h. in Richtung des Pfeiles D, angetrieben, während die Welle 27 in Richtung des Pfeiles C, d.h. im Uhrzeigersinn, dreht. Auf der Welle 10a des Antriebsmotors 10 sitzt ein weiteres Kettenrad 37, das mit der Antriebskette 11 in Eingriff steht.

Zwischen den Wellen 27 und 28 und den zugeordneten Kettenrädern 24 bzw. 25 sind Elektromagnetkupplungen 38 bzw. 39 angeordnet, die von bekannter Bauart sind und nur schematisch dargestellt sind. Jede Kupplung 38 bzw. 39 weist einen auf die zugehörige Welle 27 bzw. 28 aufgekeilten Teil 38a, 39a auf, der im eingeschalteten Zustand der Kupplung 38, 39 mit einem Teil 38b 39b gekoppelt ist, der mit dem Kettenrad 24 bzw. 25 verbunden ist.

Der Wagen 9 ist ferner mit zwei sich in vertikaler Richtung erstreckenden Armen 40 versehen, die eine Welle 41 tragen (Figur 3). Auf dieser Welle 41 sind schwenkbar zwei Hebel 42 gelagert, die an ihrem andern Ende eine Bremsrolle 43 tragen, die drehbar in den Hebel 42 gelagert ist. Die Bremsrolle 43 kann sich somit heben und senken.

Oberhalb der Trumabschnitte 3a der Förderbänder 3 und dem Wagen 9 vorgelagert ist eine Detektoreinrichtung 44 angeordnet, welche in ihrem Aufbau und ihrer Wirkungsweise weitgehend dem Detektor entspricht, der in der EP-OS 0080089 bzw. der entsprechenden US-PS 4,539,470 dargestellt und beschrieben ist. Diese Detektoranordnung 44 stellt das Vorhandensein bzw. Fehlen von Produkten auf dem ersten Förderer 1 fest, wie das später noch genauer beschrieben werden wird. Diese Detektoranordnung 44 ist über eine in Figur 1 nur angedeutet Steuerverbindung 45 mit einer Steuerung 46 verbunden, welche ihrerseits über die ebenfalls nur angedeuteten Steuerverbindungen 47 und 48 mit den Elektromagnetkupplungen 38 und 39 verbunden ist. Der Aufbau der Steuerung 46 ist nicht näher dargestellt, ergibt sich jedoch für den Fachmann ohne weiteres aus der späteren Beschreibung der Wirkungsweise. Ist die Kupplung 38 aktiviert und die Kupplung 39 desaktiviert, so wird die Kette 21 in Richtung des Pfeilers E (Figuren 1 und 2) umlaufend angetrieben, was zur Folge hat, dass der Wagen 8 in Förderrichtung A, B der beiden Förderer 1, 2 bewegt wird, und zwar mit einer Geschwindigkeit $v_3$, die etwa der Fördergeschwindigkeit $v_2$ des Förderers 2 entspricht. Ist die Kupplung 38 desaktiviert und dafür die Kupplung 39 aktiviert, so erfolgt der Antrieb der Kette 21 in entgegengesetzter Richtung, das heisst in Richtung des Pfeiles F. Der Wagen 9 wird mit einer Geschwindigkeit $v_4$ zurückbewegt, die sehr klein ist.

Wie aus Figur 1 hervorgeht, ist dem zweiten Förderer 2 ein dritter Förderer 49 nachgeschaltet, der von einem Antriebsmotor 50 her über eine Kette 51 in Richtung des Pfeiles G angetrieben wird. Die Drehrichtung der Welle 50a des Antriebsmotors 50 ist mit H bezeichnet. Die Fördergeschwindigkeit $v_5$ des dritten Förderers 49 ist etwa gleich oder grösser als die Fördergeschwindigkeit $v_1$ des ersten Förderers 1. Zwischen den Förderern 2 und 49 ist ein Stützblech 52 oder Stützrollen vorgesehen.

Oberhalb des Förderers 49 ist eine Mitnehmeranordnung 53 vorgesehen, die zum weiteren Vergleichmässigen des Schuppenabstandes dient und aufbau- und wirkungsmässig der Mitnehmeranordnung entspricht, welche in der EP-Patentanmeldung Nr. 87108598.1 ausführlicher beschrieben ist. Diese Mitnehmeranordnung 53 wird durch wenigstens ein Mitnahmerad 54 gebildet, das mit an seinem Umfang abstehenden Mitnahmenocken 55 versehen ist. Das Mitnahmerad 54 ist drehbar in zwei Schwenkhebeln 56 gelagert, von denen in Figur 1 nur der eine Schwenkhebel sichtbar ist. Die beiden Schwenkhebel 56 werden an ihrem andern Ende durch zwei sich in vertikaler Richtung erstreckende Arme 57 gehalten und sind um eine parallel zur Förderebene des Förderers 2 verlaufende Achse schwenkbar. An einem der beiden Arme 57 sind 3 Kettenräder 58, 59 und 60 gelagert, über die eine Kette 61 geführt ist, die vom Antriebsmotor 50 her angetrieben wird. Mit dem Kettenrad 59 ist ein weiteres Kettenrad 62 antriebsverbunden, über das eine Kette 63 läuft, welche mit einem Kettenrad 64 in Eingriff steht, das mit dem Mitnahmerad 54 drehfest verbunden ist. Dieses Mitnahmerad wird somit in Richtung des Pfeiles I umlaufend angetrieben. Dabei ist die Umfangsgeschwindigkeit $v_6$ dieses Mitnahmerades 54 im wesentlichen gleich der Fördergeschwindigkeit $v_5$ des Förderers 49.

In den Schwenkhebeln 56 ist wenigstens eine Förderrolle 65 gelagert, die frei drehbar ist. Im weitern ist mit den Schwenkhebeln 56 ein Anschlagelement 66 verbunden, das eine in den Förderweg der durch den Förderer 2 geförderten Produkte hineinragende Anschlagnase 66a aufweist.

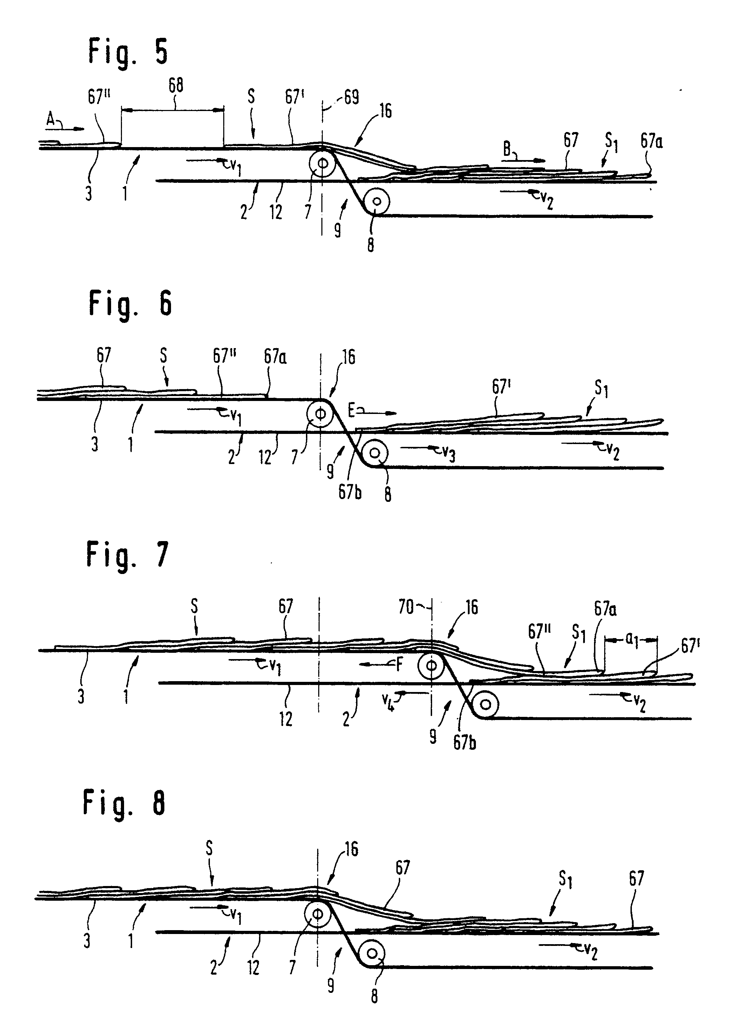

Für die nachfolgende Erläuterung der Wirkungswiese der Vergleichmässigungsvorrichtung wird nun neben den Figuren 1-4 auch auf die Figuren 5-8 Bezug genommen, welche in vereinfachter Darstellung das einlaufseitige Ende der Vorrichtung gemäss Figur 2 zeigen.

Es wird davon ausgegangen, dass sich der Wagen 9 und somit die Uebergabestelle 16 in der hintern Endlage befinden, die in den Figuren 1 und 2 mit ausgezogenen Linien dargestellt und in den Figuren 5-8 durch die Linie 69 angedeutet ist. Durch den ersten Förderer 1 werden die Druckereierzeugnisse 67, wie z.B. Zeitungen, Zeitschriften und dergleichen, in Schuppenformation S zugeführt. In dieser Schuppenformation S beträgt der Abstand zwischen aufeinanderfolgenden Druckereierzeugnissen 67, d.h. der Schuppenabstand, a. Durch die vorlaufenden Kanten 67a der vorbeilaufenden Druckereierzeugnisse 67 wird die Detektoranordnung 44 aktiviert und erzeugt Steuerimpulse, die der Steuerung 46 zugeführt werden. Diese stellt aufgrund dieser Steuerimpulse fest, in welchem Schuppenabstand die Produkte 67 ankommen. Entspricht dieser Schuppenabstand a einem Sollwert, so verbleibt der Wagen 9 in seiner hinteren Endstellung. An der Uebergabestelle 16 werden die Druckprodukte 67 dem Förderer 2 übergeben, wie das in Figur 1 gezeigt ist.

Letzterer weist, wie erwähnt, eine Fördergeschwindigkeit $v_2$ auf, die nur etwa halb so gross ist wie die Fördergeschwindigkeit $v_1$ des vorgeschalteten Förderers 1. Die durch den Förderer 1 zugeführten Druckereierzeugnisse 67 werden durch Anschlagen an der Bremsrolle 43 abgebremst, welche auf dem Förderer 2 bzw. auf dem auf diesem aufliegenden Erzeugnissen zur Auflage kommt. Die Druckereierzeugnisse 67 werden auf dem Bandförderer 2 ebenfalls in Schuppenformation $S_1$ abgelegt. Wegen der kleineren Fördergeschwindigkeit $v_2$ ist jedoch der Schuppenabstand $a_1$ innerhalb

der Schuppenformation $S_1$ kleiner als der Schuppenabstand a innerhalb der zugeführten Schuppenformation S. Aufgrund des Verhältnisses der Fördergeschwindigkeiten $v_1$ und $v_2$ von 2: 1 ist der Schuppenabstand $a_1$ nur etwa halb so gross wie der Schuppenabstand a.

Durch den Förderer 2 werden die Druckereierzeugnisse 67, die mit ihrer vorlaufenden Kante 67a auf der Oberseite der Schuppenformation $S_1$ liegen, gegen die Anschlagnase 66a des Anschlagelementes 66 gefördert. An dieser Anschlagnase 66a kommen die Druckereierzeugnisse 67 mit ihrer vorlaufenden Kante 67a zum Anstehen, wodurch die Vorwärtsbewegung der Druckprodukte 67 gestoppt wird. Das mit der Umlaufgeschwindigkeit $v_6$ umlaufende Mitnahmerad 54 kommt nun periodisch mit seinen Mitnahmenocken 55 auf den vorauslaufenden Bereich der jeweils an der Anschlagnase 66 anstehenden Druckereierzeugnisse 67 zur Einwirkung. Durch diese Mitnahmenocken 55 werden die an der Anschlagnase 66 anstehenden Erzeugnisse 67 nach unten ausgelenkt und gegen den Förderer 49 gedrückt. Das entsprechende Druckprodukt 67 wird nun durch einen Mitnahmenocken 55 und den Förderer 49 in dessen Förderrichtung G mitgenommen. Das jeweils mitgenommene Druckereierzeugnis 67 läuft unter der Förderrolle 65 hindurch und wird durch den Förderer 49 mit der Fördergeschwindigkeit $v_5$ weggefördert. Der Schuppenabstand $a_2$ in der durch den Förderer 49 weggeführten Schuppenformation $S_2$ ist nun grösser als der Schuppenabstand $a_1$ in der Schuppenformation $S_1$ und ist auch grösser als der Schuppenabstand a innerhalb der Schuppenformation S, sofern die Fördergeschwindigkeit $v_5$ grösser ist als die Fördergeschwindigkeit $v_1$ des ersten Förderers 1.

Da die durch die Mitnahmenocken 55 des Mitnahmerades 54 bewirkte Weiterbewegung der an der Anschlagnase 66a anstehenden Druckereierzeugnisse 67 in zeitlich genau festgelegten Abständen erfolgt, ist der Schuppenabstand $a_2$ innerhalb der durch den Förderer 49 weggeführten Schuppenformation $S_2$ praktisch immer gleich.

Wird nun durch die Steuerung 46 aufgrund der von der Detektoranordnung 44 erhaltenen bzw. nicht erhaltenen Steuersignale eine Unregelmässigkeit im Schuppenabstand a innerhalb der ankommenden Schuppenformation S, z.B. eine Lücke 68 (Figuren 2 und 5), festgestellt, so wird nach einer gewissen Zeit die Elektromagnetkupplung 38 aktiviert, um den Wagen 9 in Richtung des Pfeilers E in Bewegung zu setzen, sobald das letzte vor der festgestellten Lücke 68 liegende Produkt 67' auf den Bandförderer 2 abgelegt worden ist. Dieser Zeitpunkt ist in Figur 6 festgehalten. Der Wagen 9 und mit ihm die Uebergabestelle 16 bewegt sich nun mit der Geschwindigkeit $v_3$, welche der Fördergeschwindigkeit $v_2$ des Förderers 2 entspricht, in Förderrichtung B des Förderers 2 und folgt dabei der hintern Kante 67b des hintersten auf dem Förderer 2 aufliegenden Druckereierzeugnisses 67'. Mit der Verschiebung des Wagens 9 wird auch der zwischen den Umlenkrollen 4 und 7 liegende Abschnitt 3a der Förderbänder 3 des Förderers 1 länger.

Da wie bereits erwähnt der Förderer 1 eine grössere Fördergeschwindigkeit $v_1$ aufweist als der zweite Förderer 2, so holt das erste Druckereierzeugnis 67'' hinter der Lücke 68 das vorangehende Produkte 67' vor der Lücke 68 auf. Läuft nun dieses erste Produkte 67'' nach der Lücke 68 an der Detektoranordnung 44 vorbei, so erzeugt diese ein Steuersignal, das der Steuerung 46 zugeführt wird. Diese stellt nun fest, wann das aufholende Produkt 67'' die Uebergabestelle 16 erreicht und auf das hinterste auf dem Förderer 2 aufliegende Druckprodukt 67' aufgelegt werden kann. Sobald das Produkt 67'' unter Einhaltung des Schuppenabstandes $a_1$ auf dem vorangehenden Produkt 67' zur Auflage kommt, wird die Kupplung 38 desaktiviert und damit der Wagen 9 gestoppt, wie das in Figur 7 dargestellt ist. Die entsprechende Endlage des Wagens 9 ist in Figur 7 mit 70 bezeichnet. Jetzt ist die Lücke 68 geschlossen und die Uebergabe der durch den Förderer 1 geförderten Druckereierzeugnisse 67 an den Förderer 2 kann wie bereits beschrieben auf normale Art erfolgen.

Um für das Ausgleichen der nächsten festgestellten Unregelmässigkeit im Schuppenabstand a bereit zu sein, muss nun der Wagen 9 wieder in die ursprüngliche Ausgangsposition 69 gebracht werden. Dies geschieht durch Aktivierung der Magnetkupplung 39, was zur Folge hat, dass der Wagen 9 in Richtung des Pfeiles F entgegen der Förderrichtung A des Förderers 1 zurückbewegt wird. Diese Zurückbewegung erfolgt mit einer sehr kleinen Geschwindigkeit $v_4$. In Figur 8 ist der Wagen 9 wieder in seiner Ausgangsstellung 69 gezeigt. Sobald der Wagen 9 diese Ausgangsstellung 69 erreicht, wird die Kupplung 39 wieder desaktiviert.

Bei der nächsten festgestellten Unregelmässigkeit bzw. bei der nächsten Lücke wird der Wagen 9 wie bereits beschrieben erneut vorwärts bewegt.

In Figur 1 ist gestrichelt die vorderste Endposition des Wagens 9 dargestellt. Hat letzterer diese Position erreicht, ohne dass eine festgestellte Lücke geschlossen werden konnte, so muss die Vergleichmässigungsvorrichtung stillgesetzt werden.

Um festzustellen, dass das erste Produkt 67'' hinter der festgestellten Lücke 68 das vorangehende Produkt 67' auf dem Förderer 2 aufgeholt hat (Figur 7), kann auf dem Wagen 9 auch eine Lichtschrankensteuerung oder eine andersartige geeignete Detektoreinrichtung angeordnet werden, welche mit der Steuerung 46 verbunden ist.

Die beschriebene Vorrichtung gestattet es nun, auch grössere Abweichungen des Schuppenabstandes a in der ankommenden Schuppenformation S auszugleichen und insbesondere auch Lücken 68 zu schliessen. Mittels der mit dem Förderer 49 zusammenwirkenden Mitnehmeranordnung 53 lassen sich noch allfällig vorhandene kleinere Unregelmässigkeiten im Schuppenanstand $a_1$ in der Schuppenformation $S_1$ ausgleichen. Innerhalb der durch den Förderer 49 weggeführten Schuppenformation $S_2$ haben dann alle Produkte praktisch denselben Abstand $a_2$, und zwar auch dann, wenn in der zugeführten Schuppenformation S Lücken vorhanden sind.

Es versteht sich, dass für das nachfolgende Ausgleichen kleinerer Abweichungen des Schuppenabstandes anstelle der Mitnehmeranordnung 53 auch andere geeignete Einrichtungen vorgesehen werden können.

**Patentansprüche**

1. Verfahren zum Vergleichmässigen des Abstandes zwischen aufeinanderfolgenden, in einer Schuppenformation anfallenden flächigen Produkten, insbesondere Druckereierzeugnissen, dadurch gekennzeichnet, dass die Produkte (67) mittels eines ersten Förderers (1) in Schuppenformation (S) einem zweiten Förderer (2), dessen Fördergeschwindigkeit ($v_2$) kleiner ist als die Fördergeschwindigkeit ($v_1$) des ersten Förderers (1), zugeführt und auf diesem zweiten Förderer (2) wieder in Schuppenformation ($S_1$) abgelegt werden, und dass beim Feststellen einer Unregelmässigkeit (68) im Abstand (a) zwischen aufeinanderfolgenden Produkten (67) innerhalb der durch den ersten Förderer (1) zugeführten Schuppenformation (S) die Stelle (16) der Uebergabe der Produkte (67) vom ersten Förderer (1) an den zweiten Förderer (2) dem hintersten auf dem zweiten Förderer (2) aufliegenden Produkt (67) folgend in Förderrichtung (B) des zweiten Förderers (2) und im wesentlichen mit dessen Fördergeschwindigkeit ($v_2$) verschoben wird, bis das nächste durch den ersten Förderer (1) geförderte Produkt (67") die Uebergabestelle (16) erreicht hat und dachziegelartig zur Auflage auf dem genannten hintersten Produkt (67') auf dem zweiten Förderer (2) gebracht werden kann.

2. Verfahren nach Anspruch 1, dadurch gekennzeichnet, dass nach erfolgtem Einholen des genannten hintersten Produktes (67') auf dem zweiten Förderer (2) durch das genannte nächste Produkt (67") die Uebergabestelle (16) entgegen der Förderrichtung (A) des ersten Förderers (1) in eine Endstellung (69) zurückbewegt wird, vorzugsweise mit gegenüber der Fördergeschwindigkeit ($v_2$) des zweiten Förderers (2) geringerer Geschwindigkeit ($v_4$).

3. Verfahren nach Anspruch 1 oder 2, dadurch gekennzeichnet, dass die Fördergeschwindigkeit ($v_2$) des zweiten Förderers (2) etwa halb so gross gewählt wird wie die Fördergeschwindigkeit ($v_1$) des ersten Förderers (1).

4. Vorrichtung zum Vergleichmässigen des Abstandes zwischen aufeinanderfolgenden, in einer Schuppenformation anfallenden flächigen Produkten, insbesondere Druckereierzeugnissen, mit einem Förderer zum Zubringen der Produkte in Schuppenformation, gekennzeichnet durch einen zweiten Förderer (2), der kontinuierlich mit einer kleineren Fördergeschwindigkeit ($v_2$) antreibbar ist als der vorgeschaltete erste Förderer (1), eine Detekoranordnung (44) zum Feststellen einer Unregelmässigkeit (68) im Abstand (a) zwischen aufeinanderfolgenden Produkten (67) innerhalb der durch den ersten Förderer (1) zugeführten Schuppenformation (S) und eine in Förderrichtung (B) des zweiten Förderers (2) verschiebbare Uebergabestelle (16) für die Uebergabe der Produkte (67) vom ersten Förderer (1) an den zweiten Förderer (2), die bei festgestellter Unregelmässigkeit (68) im Schuppenabstand (a) dem hintersten auf dem zweiten Förderer (2), aufliegenden Produkt (67') folgend mit einer im wesentlichen der Fördergeschwindigkeit ($v_2$) des zweiten Förderers (2) entsprechenden Geschwindigkeit ($v_3$) verschiebbar ist, bis das nächste durch den ersten Förderer (1), geförderte Produkte (67") die Uebergabestelle (16) erreicht hat und dachziegelartig zur Auflage auf dem genannten hintersten Produkt (67') auf den zweiten Förderer (2) bringbar ist.

5. Vorrichtung nach Anspruch 4, dadurch gekennzeichnet, dass nach erfolgtem Einholen des genannten hintersten Produktes (67') auf dem zweiten Förderer (2) durch das genannte nächste Produkt (67") die Uebergabestelle (16) entgegen der Förderrichtung (A) des ersten Förderers (1) in eine Endstellung (69) zurückbewegbar ist, vorzugsweise mit gegenüber der Fördergeschwindigkeit ($v_2$) des zweiten Förderers (2) geringerer Geschwindigkeit ($v_4$).

6. Vorrichtung nach Anspruch 4 oder 5, dadurch gekennzeichnet, dass der zweite Förderer (2) mit einer Fördergeschwindigkeit ($v_2$) antreibbar ist, die etwa halb so gross ist wie die Fördergeschwindigkeit ($v_1$) des ersten Förderers (1).

7. Vorrichtung nach einem der Ansprüche 4-6, gekennzeichnet durch eine Steueranordnung (46) zum Verschieben der Uebergabestelle (16), an die die Detektoranordnung (44) angeschlossen ist.

8. Vorrichtung nach einem der Ansprüche 4-7, dadurch gekennzeichnet, dass die durch den zweiten Förderer (2) festgelegte Förderebene tiefer liegt, als die durch den ersten Förderer (1) festgelegte Förderebene.

9. Vorrichtung nach Anspruch 8, dadurch gekennzeichnet, dass jeder Förderer (1,2) wenigstens ein endloses, umlaufend antreibbares Förderelement (3, 12) aufweist, wobei der obere Trum (3a, 3b) des Förderelementes (3) des ersten Förderers (1) in dessen Förderrichtung (A) gesehen vor der Uebergabestelle (16) oberhalb und nach der Uebergabestelle (16) unterhalb des oberen Trums (12a) des Förderelementes (12) des zweiten Förderers (2) verläuft.

10. Vorrichtung nach einem der Ansprüche 4-9, dadurch gekennzeichnet, dass die Uebergabestelle (16) durch einen mittels eines Antriebes (10, 21, 31, 32, 38, 39) in Förderrichtung (B,A) des zweiten bzw. ersten Förderers (2,1) hin- und her verschiebbaren Wagen (9) festgelegt ist.

11. Vorrichtung nach Anspruch 9 und 10, dadurch gekennzeichnet, dass der obere Trum (3a, 3b) des Förderelementes (3) des ersten Förderers (1) über Umlenkrollen (7, 8) am Wagen (9) geführt ist.

12. Vorrichtung nach Anspruch 10, dadurch gekennzeichnet, dass der Wagen (9) an einem endlosen Zugorgan (21), vorzugsweise einer Kette, befestigt ist, welches über zwei in entgegengesetzten Richtungen (C, D) antreibbare Antriebsräder (24, 25) geführt ist, die wechselweise an eine Antriebseinheit (10) ankuppelbar sind.

13. Vorrichtung nach den Ansprüchen 7 und 12, dadurch gekennzeichnet, dass jedes Antriebsrad (24, 25) mittels einer durch die Steuereinheit (46) einschaltbaren Kupplung (38, 39) mit einer Welle (27, 28) verbindbar ist, wobei die beiden Wellen (27, 28) vorzugsweise von einer gemeinsamen Antriebseinheit (10) in entgegengesetztem Drehsinn (C, D) antreibbar sind.

14. Vorrichtung nach einem der Ansprüche 10-13, dadurch gekennzeichnet, dass am Wagen (9) wenigstens ein Bremselement (43) zum Abbremsen der durch den ersten Förderer (1) zugeführten Produkte (67) gelagert ist.

15. Vorrichtung nach Anspruch 14, dadurch gekennzeichnet, dass das Bremselement eine sich auf dem zweiten Förderer (2) bzw. auf den auf letzterem aufliegenden Produkten (67) abstützende, frei drehbare Rolle (43) ist, die vorzugsweise heb- und senkbar gelagert ist.

16. Vorrichtung nach einem der Ansprüche 4-15, dadurch gekennzeichnet, dass am Ende der förderwirksamen Strecke des zweiten Förderers (2) eine periodisch die Produkte (67) erfassende und beschleunigende Mitnehmereinrichtung (53) angeordnet ist.

17. Vorrichtung nach Anspruch 16, dadurch gekennzeichnet, dass die Mitnehmereinrichtung (53) wenigstens ein periodisch zur Einwirkung auf ein Produkt (67) bringbares Mitnahmeorgan (54) sowie einen dem zweiten Förderer (2) nachgeschalteten, mit dem Mitnahmeorgan (54) zusammenwirkenden dritten Förderer (49) aufweist, dessen Fördergeschwindigkeit ($v_5$) grösser ist als diejenige des zweiten Förderers (2), wobei das Mitnahmeorgan (54) mit einer der Fördergeschwindigkeit ($v_5$) des dritten Förderers (49) entsprechenden Umfangsgeschwindigkeit ($v_6$) umlaufend antreibbar ist.

18. Vorrichtung nach Anspruch 17, gekennzeichnet durch eine im Wirkbereich des Mitnahmeorganes (54) angeordnete Anschlageinrichtung (66), an der die vom zweiten Förderer (2) zugeführten Produkte (67) mit ihrer verlaufenden Kante (67a) zum Ausstossen bringbar sind, wobei das Mitnahmeorgan (54) jeweils das an der Anschlageinrichtung (66) anstehende Produkt (67) aus dem Wirkbereich der Anschlageinrichtung (66) auslenkt und mitnimmt.

**Claims**

1. Process for evening out the spacing between successive sheet-like products, in particular printing products, arriving in an imbricated formation, characterised in that the products (67) are fed by means of a first conveyor (1) in an imbricated formation (S) to a second conveyor (2), the conveying speed ($v_2$) of which is less than the conveying speed ($v_1$) of the first conveyor (1), and are deposited on this second conveyor (2) again in an imbricated formation ($S_1$) and in that, upon establishing an irregularity (68) in the spacing (a) between successive products (67) within the imbricated formation (S) fed in by the first conveyor (1), the point (16) of transferring the products (67) from the first conveyor (1) to the second conveyor (2) is displaced in a manner following the rearmost product (67) resting on the second conveyor (2) in the conveying direction (B) of the second conveyor (2) and essentially at the conveying speed ($v_2$) of the latter, until the next product (67'') conveyed by the first conveyor (1) has reached the transfer point (16) and can be brought to rest in a manner similar to roofing tiles on the said rearmost product (67') on the second conveyor (2).

2. Process according to Claim 1, characterised in that, once the said rearmost product (67') on the second conveyor (2) has been caught up by the said next product (67''), the transfer point (16) is moved back counter to the conveying direction (A) of the first conveyor (1) into an end position (69), preferably at a lower speed ($v_4$) in comparison with the conveying speed ($v_2$) of the second conveyor (2).

3. Process according to Claim 1 or 2, characterised in that the conveying speed ($v_2$) of the second conveyor (2) is chosen to be about half the conveying speed ($v_1$) of the first conveyor (1).

4. Apparatus for evening out the spacing between successive sheet-like products, in particular printing products, arriving in an imbricated formation, having a conveyor for bringing in the products in an imbricated formation, characterised by a second conveyor (2), which can be driven continuously at a lower conveying speed ($v_2$) than the upstream first conveyor (1), a detector arrangement (44) for establishing an irregularity (68) in the spacing (a) between successive products (67) within the imbricated formation (S) fed in by the first conveyor (1) and a transfer point (16), displaceable in the conveying direction (B) of the second conveyor (2), for transferring the products (67) from the first conveyor (1) to the second conveyor (2), which transfer point can, if an irregularity (68) in the imbrication spacing (a) is established, be displaced in a manner following the rearmost product (67') resting on the second conveyor (2) at a speed ($v_3$) essentially corresponding to the conveying speed ($v_2$) of the second conveyor (2), until the next product (67'') conveyed by the first conveyor (1) has reached the transfer point (16) and can be brought to rest in a manner similar to roofing tiles on the said rearmost product (67') on the second conveyor (2).

5. Apparatus according to Claim 4, characterised in that, once the said rearmost product (67') on the second conveyor (2) has been caught up by the said next product (67''), the transfer point (16) can be moved back counter to the conveying direction (A) of the first conveyor (1) into an end position (69), preferably at a lower speed ($v_4$) in comparison with the conveying speed ($v_2$) of the second conveyor (2).

6. Apparatus according to Claim 4 or 5, characterised in that the second conveyor (2) can be driven at a conveying speed ($v_2$) which is about half the conveying speed ($v_1$) of the first conveyor (1).

7. Apparatus according to one of Claims 4 - 6, characterised by a control arrangement (46) for displacing the transfer point (16), to which arrangement the detector arrangement (44) is connected.

8. Apparatus according to one of Claims 4 - 7, characterised in that the conveying level defined by the second conveyor (2) is lower than the conveying level defined by the first conveyor (1).

9. Apparatus according to Claim 8, characterised in that each conveyor (1, 2) has at least one endless conveying element (3, 12) which can be driven in circulation, the upper strand (3a, 3b) of the conveying element (3) of the first conveyor (1) running above the upper strand (12a) of the conveying element (12) of the second conveyor (2) ahead of the transfer point (16) and running below the said strand after the transfer point (16), in each case seen in the conveying direction (A) of the said first conveyor.

10. Apparatus according to one of Claims 4 - 9, characterised in that the transfer point (16) is defined by a carriage (9) which can be displaced back and forth by means of a drive (10, 21, 31, 32, 38, 39) in the conveying direction (B, A) of the second and first conveyor (2, 1).

11. Apparatus according to Claim 9 and 10, characterised in that the upper strand (3a, 3b) of the conveying element (3) of the first conveyor (1) is led over deflection rollers (7, 8) on the carriage (9).

12. Apparatus according to Claim 10, characterised in that the carriage (9) is fastened to an endless drawing member (21), preferably a chain, which is led over two drive wheels (24, 25), which can be driven in opposite directions (C, D) and can be coupled alternately to a drive unit (10).

13. Apparatus according to Claims 7 and 12, characterised in that each drive wheel (24, 25) can be connected by means of a clutch (38, 39), which can be engaged by the control unit (46), to a shaft (27, 28), the two shafts (27, 28) preferably being able to be driven in opposite rotational senses (C, D) by a common drive unit (10).

14. Apparatus according to one of Claims 10 - 13, characterised in that at least one braking element (43) for decelerating the products (67) fed in by the first conveyor (1) is mounted on the carriage (9).

15. Apparatus according to Claim 14, characterised in that the braking element is a freely rotatable roller (43), which supports itself on the second conveyor (2) or on the products (67) resting on the latter, and is preferably mounted in such a way that it can be raised and lowered.

16. Apparatus according to one of Claims 4 - 15, characterised in that at the end of the conveying-active zone of the second conveyor (2) there is a catch mechanism (53) arranged, periodically taking up and accelerating the products (67).

17. Apparatus according to Claim 16, characterised in that the catch mechanism (53) has at least one catching member (54), which can be brought periodically to act on a product (67), as well as a third conveyor (49), which is downstream of the second conveyor (2), interacts with the catching member (54) and the conveying speed ($v_5$) of which is greater than that of the second conveyor (2), the catching member (54) being able to be driven rotatingly at a circumferential speed ($v_6$) corresponding to the conveying speed ($v_5$) of the third conveyor (49).

18. Apparatus according to Claim 17, characterised by a stop mechanism (66), which is arranged in the active region of the catching member (54) and at which the products (67) fed in by the second conveyor (2) can be made to strike with their leading edge (67a), the catching member (54) in each case deflecting the product (67) present at the stop mechanism (66) out of the active region of the stop mechanism (66) and taking it along with it.

## Revendications

1. Procédé pour régulariser la distance entre des articles plats successifs arrivant en formation imbriquée, notamment des imprimés, caractérisé en ce que les articles (67) sont, au moyen d'un premier convoyeur (1), amenés en formation imbriquée (S) à un second convoyeur (2) dont la vitesse de transport ($V_2$) est inférieure à la vitesse de transport ($V_1$) du premier convoyeur (1), et sont déposés à nouveau en formation imbriquée ($S_1$) sur ce second convoyeur (2), et en ce qu'en cas de constatation d'une irrégularité (68) concernant la distance (a) entre des articles successifs (67) dans la formation imbriquée (S) amenée par le premier convoyeur (1), le point (16) de transfert des articles (67) du premier convoyeur (1) au second convoyeur (2) est déplacé, en suivant l'article (67') reposant en dernier sur le second convoyeur (2), dans la direction de transport (B) du second convoyeur (2) et sensiblement à la vitesse de transport ($V_2$) de ce dernier, jusqu'à ce que l'article suivant (67") transporté par le premier convoyeur (1) ait atteint le point de transfert (16) et puisse être posé à la manière d'une tuile sur le dernier article précité (67') sur le second convoyeur (2).

2. Procédé selon la revendication 1, caractérisé en ce qu'une fois que l'article suivant précité (67") a rattrapé avec succès le dernier article précité (67') sur le second convoyeur (2), le point de transfert (16) est ramené à une position finale (69) à l'encontre de la direction de transport (A) du premier convoyeur (1), de préférence à une vitesse ($V_4$) inférieure à le vitesse de transport ($V_2$) du second convoyeur (2).

3. Procédé selon la revendication 1 ou 2, caractérisé en ce que la vitesse de transport ($V_2$) du second convoyeur (2) est choisie égale à environ la moitié de la vitesse de transport ($V_1$) du premier convoyeur (1).

4. Dispositif pour régulariser la distance entre des articles plats successifs arrivant en formation imbriquée, notamment des imprimés, avec un convoyeur pour amener les articles en formation imbriquée, caractérisé par un second convoyeur (2), qui peut être entraîné en continu à une vitesse de transport ($V_2$) inférieure à celle du premier convoyeur (1) qui le précède, un ensemble détecteur (44) pour constater une irrégularité (68) concernant la distance (a) entre des articles successifs (67) dans la formation imbriquée (S) amenée par le premier convoyeur (1), et un point de transfert (16), déplaçable dans la direction de transport (B) du second convoyeur (2) et destiné au transfert des articles (67) du premier convoyeur (1) au second convoyeur (2), point qui, lorsqu'une irrégularité (68) est constatée en ce qui concerne la distance d'imbrication (a), peut être déplacé, en suivant l'article (67') reposant en dernier sur le second convoyeur (2), et à une vitesse (V₃) correspondant sensiblement à la vitesse de transport (V₂) du second convoyeur (2), jusqu'à ce que l'article suivant (67") transporté par le premier convoyeur (1) ait atteint le point de transfert (16) et puisse être posé à la manière d'une tuile sur le dernier article précité (67') sur le second convoyeur (2).

5. Dispositif selon la revendication 4, caractérisé en ce qu'une fois que l'article suivant précité (67") a rattrapé avec succès le dernier article précité (67') sur le second convoyeur (2), le point de transfert (16) peut être ramené à une position finale (69) à l'encontre de la direction de transport (A) du premier convoyeur (1), de préférence à une vitesse (V₄) inférieure à la vitesse de transport (V₂) du second convoyeur (2).

6. Dispositif selon la revendication 4 ou 5, caractérisé en ce que le second convoyeur (2) peut être entraîné à une vitesse de transport (V₂) qui est égale à environ la moitié de la vitesse de transport (V₁) du premier convoyeur (1).

7. Dispositif selon l'une des revendications 4 à 6, caractérisé par un ensemble de commande (46) pour déplacer le point de transfert (16), auquel est raccordé l'ensemble détecteur (44).

8. Dispositif selon l'une des revendications 4 à 7, caractérisé en ce que le plan de transport défini par le second convoyeur (2) se trouve plus bas que le plan de transport défini par le premier convoyeur (1).

9. Dispositif selon la revendication 8, caractérisé en ce que chaque convoyeur (1,2) présente au moins un élément transporteur sans fin (3, 12) pouvant être entraîné en circulation, le tronçon supérieur (3a, 3b) de l'élément transporteur (3) du premier convoyeur (1) s'étendant, vu dans le direction de transport (A) de ce dernier, au-dessus du tronçon supérieur (12a) de l'élément transporteur (12) du second convoyeur (2) avant le point de transfert (16), et en dessous après le point de transfert (16).

10. Dispositif selon l'une des revendications 4 à 9, caractérisé en ce que le point de transfert (16) est défini par un chariot (9) qui, au moyen d'un entraînement (10, 21, 31, 32, 38, 39), peut être déplacé en va-et-vient dans la direction de transport (B,A) du second ou du premier convoyeur (2,1).

11. Dispositif selon les revendications 9 et 10, caractérisé en ce que le tronçon supérieur (3a, 3b) de l'élément transporteur (3) du premier convoyeur (1) est guidé contre le chariot (9) en passant par des poulies de renvoi (7, 8).

12. Dispositif selon la revendication 10, caractérisé en ce que le chariot (9) est fixé à un organe de traction sans fin (21), de préférence une chaîne, qui passe par deux roues d'entraînement (24, 25) qui peuvent être entraînées dans des directions opposées (C, D) et qui peuvent être alternativement accouplées à une unité d'entraînement (10).

13. Dispositif selon les revendications 7 et 12, caractérisé en ce que chaque roue d'entraînement (24, 25) peut être reliée à un arbre (27, 28) au moyen d'un accouplement (38, 39) pouvant être enclenché par l'unité de commande (46), les deux arbres (27, 28) pouvant de préférence être entraînés dans des sens de rotation opposés (C, D) par une unité d'entraînement commune (10).

14. Dispositif selon l'une des revendications 10 à 13, caractérisé en ce qu'au moins un élément de freinage (43) est monté sur le chariot (9, en vue de freiner les articles (67) amenés par le premier convoyeur (1).

15. Dispositif selon la revendication 14, caractérisé en ce que l'élément de freinage est un rouleau librement rotatif (43) qui s'appuie sur le second convoyeur (2) ou encore sur les articles (67) reposant sur ce dernier et qui est de préférence monté relevable et abaissable.

16. Dispositif selon l'une des revendications 4 à 15, caractérisé en ce qu'un mécanisme entraîneur (53), saisissant et accélérant périodiquement les articles (67), est monté à l'extrémité du parcours actif pour le transport du second convoyeur (2).

17. Dispositif selon la revendication 16, caractérisé en ce que le mécanisme entraîneur (53) présente au moins un organe entraîneur (54) pouvant être amené périodiquement en action sur un article (67), ainsi qu'un troisième convoyeur (49), faisant suite au second convoyeur (2) et coopérant avec l'organe entraîneur (54), et dont la vitesse de transport (V₅) est supérieure à celle du second convoyeur (2), l'organe entraîneur (54) pouvant être entraîné en circulation à une vitesse circonférentielle (V₆) correspondant à la vitesse de transport (V₅) du troisième convoyeur (49).

18. Dispositif selon la revendication 17, caractérisé par un mécanisme de butée (66) qui est disposé dans la plage d'action de l'organe entraîneur (54) et contre lequel peuvent être amenés en butée, par leur bord avant (67a), les articles (67) amenés par le second convoyeur (2), l'organe entraîneur (54) déviant chaque fois hors de la plage d'action du mécanisme de butée (66) l'article (67) qui se trouve contre le mécanisme de butée (66), et entraînant cet article avec lui.

Fig. 1

# Fig. 2

Fig. 3

EP 0 259 650 B1

Fig. 4

EP 0 259 650 B1

Fig. 5

Fig. 6

Fig. 7

Fig. 8